Europäisches Patentamt

European Patent Office

Office européen des brevets

(11) Publication number: **0 509 123 A1**

## EUROPEAN PATENT APPLICATION

(21) Application number: **91106319.6**

(22) Date of filing: **19.04.91**

(51) Int. Cl.5: **B01D 29/25**, B01D 29/64, B01D 29/82

(43) Date of publication of application:
**21.10.92 Bulletin 92/43**

(84) Designated Contracting States:
**AT CH DE DK FR GB IT LI NL SE**

(71) Applicant: **REIME A/S**

**N-4350 Naerbo(NO)**

(72) Inventor: **Obrestad, Harald**

**N-4350 Naerbo(NO)**

(74) Representative: **Wagner, Karl Heinz et al**
**H. Wagner & Co. AB Norra Vallgatan 72**
**S-211 22 Malmö(SE)**

(54) A method and a device for the mechanical separation of natural manure.

(57) In a method and a device for the mechanical separation of natural manure into a wet phase and a dry phase for individual applications, the manure separator comprises a strainer pipe (5) wherein the screw conveyor (9) rotates. In order to obtain an especially efficient separation, there is, at a certain location of the movement path of the manure mass within the separator, established a manure plug forming zone (10), e.g. through the removal of the screw conveyor thread (9') over a certain longitudinal section, wherein the manure mass is subjected to minimum external influence and, thus, is given the opportunity of buidling itself up into a relatively dry plug. The plug from which dewatered mass is removed continuously from the downstream end thereof, is continuously added new manure mass from the opposite side, and will constitute a barrier performing a sufficient counter pressure for forced dewatering of the moving manure mass at the upstream side of the plug.

The present invention relates to a method and a device for the mechanical separation of natural manure masses into a wet phase and a dry phase for individual applications.

Generally, natural manure or manure from domestic animals is separated into a wet phase and a dry phase in order to obtain manurial matter easier to handle.

If the manure is separated in such a degree that the dry phase contains at least 20 percent by weight of dry substance, the dry manurial matter will be self-composting, i.e. capable of being plowed down and act as a soil-improving agent, without any risk of polluting the surroundings. From a separator, such a dry manure may be conveyed to a conventional manure cellar for storage.

The wet phase of the manure, the wet manure, would be strained through the strainer device of the separator, wherein the holes incorporated into the perforation of the cylindrical mantle of the strainer device may have a diameter of e.g. 3 mm. Such a wet manure is easily pumpable and may, possibly, be diluted with water, in order to be used as a liquid manurial matter for meadows. Also, such a diluted wet manure may be pumped onto a meadow by means of ordinary watering plants.

Today, manure from domestic animals containing wet as well as dry manure is collected in a large tank/room. In order to satisfy the manure-accomodating capacity of a middling large farm, the tank/room must have a substantial volume. From the tank/room, the manure from domestic animals is pumped to a manure separator effecting the separation into wet and dry phases.

Known methods and devices for the separation of natural manure are laborious. Thus, it would be advantageously to be capable of effecting the separation in the immediate association to a central scraper plant for manure from domestic animals, and thereby avoid the intermediate working operations of conveying the manure to said large tank/room and therefrom to the separator. Also, there is a need for a manure separator which by way of simple means would be capable of effecting the necessary separation into wet and dry phases. Especially, there is a need for a manure separator wherein a forced dewatering may be effected in a simple manner during the separation process.

The method and the device according to the invention are characterized through the features defined in the following claims.

Such a method and such a device, respectively, may easily be adapted for use in direct association to a central scraper plant for manure from domestic animals.

In the separation method according to the invention, at a certain location of the feeding path of the manure, a manure plug forming station or zone is established, wherein the manure masses are subjected to minimum external influence and, thus, be given the opportunity of building themselves up, forming a relatively dry plug. Such a plug will form a barrier against liquid manure components and provide for a sufficient counter pressure to press liquid manure out through the perforation holes in the cylindrical mantle surrounding the feeding means for the manure. Thereby, a forced dewatering of the mass is achieved, favouring the separation effect.

Practical experiments have shown that such a manure plug will have a liquid content as low as 60-70 percent by weight, i.e. a dry substance content of 30-40 percent by weight. The plug consists of a loosely packed resilient mass. "Dry" mass must be removed continuously from the plug which, in its turn, is continuously added new matter and, thus, maintains the thickness thereof during the entire separation process. Mass is removed from the downstream end of the plug by scraping or the like.

As a feeding means for the manure from domestic animals, it is suitable to use a screw conveyor concentrically surrounded by a perforrated cylinder mantle. By removing a portion of the screw thread over a certain length of the screw, said plug-forming station is established, the screw thread downstream of the plug thereby acting as scraper means for the manure plug and as means for the further transport of dry mass from the plug, i.e. dry manure which therefrom may be conveyed directly to a manure cellar or the like.

The perforated cylinder mantle surrounding the screw conveyor is, in its turn, surrounded by a non-perforated cylinder mantle which, at the bottom portion thereof, is provided with a discharge socket for liquid manure, wet manure, which is transported to a suitable storage in a manner known per se.

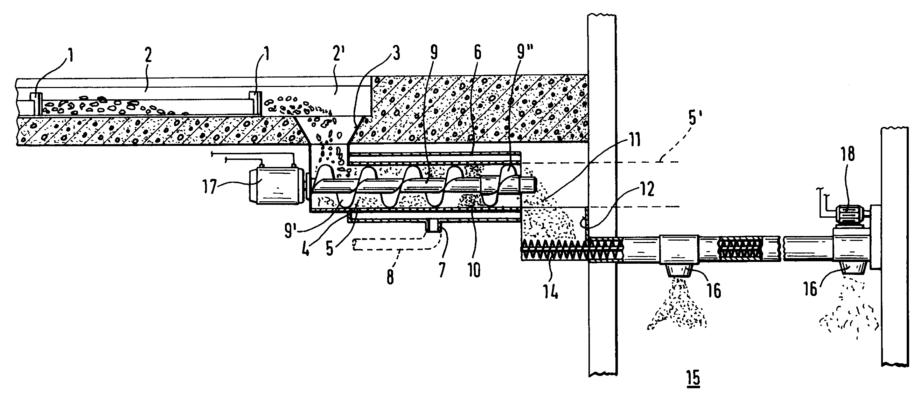

Further objects, features and advantages of the present invention will appear from the following description in connection with an example of a preferred embodiment diagrammatically illustrated in the enclosed drawing, wherein the single figure shows a vertical section through a manure separation device in accordance with the invention, arranged in immediate association to a central scraper plant for manure from domestic animals.

The separation device for manure from domestic animals as shown in the figure of the drawing, is arranged in direct association to a central scraper plant, shown diagrammatically only, the pivotable carriers thereof being denoted with the reference numeral 1; 2 indicating a manure chute wherein the scraper plant has been placed.

At the downstream end 2' thereof, the manure chute 2 ends in a downwardly directed funnel 3, the bottom end thereof ending in a separation chamber 4.

In the embodiment shown, the separation chamber is defined by a cylinder mantle 5 perforated over the major part of the longitudinal extent thereof. The perforation holes may e.g. have a diameter of 3 mm; such a dimension being found suitable for a satisfactory straining-off of wet manure.

The partly perforated cylinder mantle 5 is, within the perforated area thereof, surrounded by a concentrical non-perforated cylinder mantle 6 which, at the bottom portion thereof, is provided with a discharge socket 7 for wet manure. The discharge socket 7 may, as known per se, be coupled to a pipe line or hose 8 leading to a storage room, not shown, e.g. a basin for liquid manure.

Within the separation chamber 4, there has been arranged a feeding means for manure supplied via the funnel 3. In the embodiment shown, the feeding means has the form of a screw conveyor concentrical with the cylinder mantles 5 and 6, the thread thereof being denoted 9' . Such a helical feeding means will contribute in pressing manure liquid, more or less radially, out of the manure mass set i motion, so that the manure mass screwed forwardly, successively becoming drier and drier as the same is being moved forwardly in the feeding direction.

However, it has been found that the hitherto described separation is not sufficient in order to obtain an optimal dewatering of the manure, i.e. to achieve a dry manure having a dry substance content in the order of 30-40 percent of weight.

Therefore, in accordance with the invention, there has been established, at a certain location of the feeding path of the partly separated manure, a manure plug forming zone 10 extending over a certain longitudinal section of said feeding path.

According to the preferred embodiment, this plug-forming zone is established through removing the screw thread 9' over said longitudinal section. In accordance with the figure, a thread portion approximately corresponding to 360 degrees has been removed. However, over said longitudinal section, the shaft 9 of the screw conveyor is intact.

When the successively fed dewatered manure arrives at the plug-forming zone 10, where there in lack of feeding means no longer takes place a direct feeding of that end portion of the manure mass being the foremost at any time, the more or less dewatered manure mass starts to build up into a plug, which thereafter continuously forms a barrier creating a sufficient counter presssure in order to effect pressing out of the liquid manure upstreams of the plug through the perforations of the cylinder mantle 5. Thus, the plugforming effects a forced dewatering of the manure.

When the manure separator is in use, the relatively loose and resilient mass within the downstream gable face of the manure plug has to be removed continuously, simultaneously as the plug continuously is added new manure mass at the opposite gable face.

Suitably, this may be made by means of a corresponding screw conveyor thread 9'' formed on the shaft 9 immediately downstream of the plug-forming zone 10, and which scrapes loose dry manure mass and conveys it further in the original direction of advance.

In the embodiment shown, the screw conveyor thread 9'' feeds dewatered manure mass 11 down into an underlying chamber 12, wherefrom the manure mass is fed into a pipe 13 by means of a conveyor screw 14. The pipe 13 is situated above a storage for dry manure, e.g. a manure cellar 15, and has outlet sockets 16 for controlled discharge of dry manure.

In the examplary embodiment shown, the screw conveyor 9,9',9'' of the separation device is driven by a motor 17 and the conveyor screw 14 by another smaller motor 18. However, there is nothing to prevent lengthening the screw conveyor 9,9',9'' and the cylinder mantle 5 as indicated in dotted lines 5', inwardly above the manure cellar 15, and providing the non-perforated cylinder mantle extension 5' with dry manure discharge sockets corresponding to the sockets 16. Then, the need will be for one motor 17 only.

## Claims

1. A method for the mechanical separation of natural manure masses into a wet phase and a dry phase, wherein the separation is effected in that the manure mass is moved through a cylindrical strainer container (5) by means of a screw conveyor (9,9') concentrically arranged within the strainer container, **characterized in** that, at least at one location in the manure mass within the strainer container (5), a zone (10) is established, wherein the manure mass is subjected to minimum external influence, so that a plug of relatively dry manure is formed, constituting a barrier and forming a counter pressure zone contributing to the dewatering of the manure mass, dewatered dry manure being removed from the downstream end of the manure plug for further transport.

2. A device for carrying out the method as set forth in claim 1, comprising a cylindrical strainer container (5) wherein a concentrical screw conveyor (9,9') is rotatively arranged, and wherein the strainer container (5) is surrounded by a non-perforated cylinder mantle (6) having outlet(s) (7) for strained-off wet manure, **characterized in** that the thread (9') of the screw conveyor, wholly or partly, is removed over a certain longitudinal section of the screw conveyor, said longitudinal section constituting a zone (10) wherein a plug of relatively dry manure may be formed, and that a means (9") has been arranged for the removal and further transport of dewatered dry manure from the downstream end of the plug.

3. A device as set forth in claim 2, **characterized in** that the means for the removal and further transport of dewatered dry manure is constituted by a screw conveyor thread (9").

4. A device as set forth in claim 3, **characterized in** that a common shaft (9) has been arranged for both threads (9',9") of the screw conveyor.

5. A device as set forth in claim 2, 3 or 4, **characterized in** that the same is arranged in direct association to a central scraper plant (1,2) for manure from domestic animals.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 188 942 (KURT WANDEL) | 1,2 | B01D29/25 |
| Y | * column 2 - column 5 * | 3,4 | B01D29/64 |
| | --- | | B01D29/82 |
| X | EP-A-367 037 (FAN ENGINEERING) | 1,2,5 | |
| Y | * column 6, line 50 - column 13, line 8 * | 3,4 | |
| | --- | | |
| Y | FR-E-61 559 (G.E. BLANCH RE) | 3,4 | |
| | * page 1 - page 2 * | | |
| | --- | | |
| A | DE-A-3 122 131 (ABEL, GÜNTHER) | 3,4 | |
| | * page 8 - page 11 * | | |
| | --- | | |
| A | US-A-3 966 607 (WILLIAM WAYNE GAYNOR) | | |
| | ----- | | |

**TECHNICAL FIELDS SEARCHED (Int. Cl.5)**

B01D
B30B

The present search report has been drawn up for all claims

| Place of search | Date of completion of the search | Examiner |
|---|---|---|
| THE HAGUE | 04 OCTOBER 1991 | DE PAEPE P.F.J. |